# EUROPÄISCHE PATENTSCHRIFT

(11) **EP 0 370 182 B1**
(45) Veröffentlichungstag und Bekanntmachung des Hinweises auf die Patenterteilung: **27.04.1994**
(21) Anmeldenummer: 89115910.5
(22) Anmeldetag: 29.08.1989
(51) Int. Cl.: B27K 3/50, B27K 3/52

(54) **Holzschutzmittel**
Wood preservative
Agent préservatif du bois

(30) Priorität: 25.11.1988 DE 3839848
(43) Veröffentlichungstag der Anmeldung: 30.05.1990
(73) Patentinhaber: RÜTGERSWERKE AKTIENGESELLSCHAFT, 60326 Frankfurt (DE)
(72) Erfinder: Härtner, Helmut, Dr., D-6940 Weinheim (DE); Giebeler, Eberhardt, Dr., D-6905 Schriesheim 2 (DE); Spatz, Andreas, D-6800 Mannheim 31 (DE); Seubert, Bernhard, D-6803 Edingen-Neckarhausen (DE); Welte, Michael, Dr., D-6143 Lorsch (DE)

(56) Entgegenhaltungen:
- EP-A- 0 234 461
- EP-A- 0 238 051
- CENTRAL PATENTS INDEX, BASIC ABSTRACTS JOURNAL, Sektion C: AGDOC, Woche A11, 11. Mai 1978, Klasse C038, Zusammenfassung Nr. 20655 A/11, Derwent Publications Ltd, London, GB; & JP-A-78 012 403
- CHEMICAL ABSTRACTS, Band 94, Nr. 8, 23. Februar 1981, Seite 95, Zusammenfassung Nr. 49037x, Columbus, Ohio, US; & JP-A-80 113 507

## Beschreibung

Die Erfindung betrifft wasserlösliche, fungizide Mittel zum Schutz von Holz auf der Basis von 2-Hydroxypyridin-N-oxid beziehungsweise dessen wasserlöslichen Salze.

In einer älteren Anmeldung der Anmelderin P 37 18 012.6 werden wirksame wasserlösliche Holzschutzmittel beschrieben, die ein wasserlösliches Salz des 2-Oxypyridin-N-oxids und eine quartäre Ammoniumverbindung enthalten.

Es ist ein Nachteil dieser Mittel, daß der an sich günstige und umweltfreundliche Wirkstoff 2-Oxypyridin-N-oxid (=2-Hydroxypyridin-N-oxids) auf dem Holz nicht fixiert und damit bei einer Bewitterung auswaschbar ist.

Aufgabe der Erfindung ist es daher, ein wasserlösliches Holzschutzmittel bereitzustellen, das den Wirkstoff 2-Hydroxypyridin-N-oxid enthält, bei dem aber dieser Wirkstoff nach der Applikation auf beziehungsweise in dem behandelten Holz fixiert wird. Die Lösung der Aufgabe erfolgt durch Holzschutzmittel gemäß der Ansprüche 1-7. Die bevorzugte Anwendung dieser Mittel erfolgt im vorbeugenden Bläueschutz gemäß Anspruch 8.

Es wurde gefunden, daß eine wäßrige Lösung, die 2-Hydroxypyridin-N-oxid oder ein wasserlösliches Salz dieser Verbindung und ein Kupfersalz enthält, stabil ist, wenn sie zusätzlich eine oder mehrere aminische Verbindungen enthält.

Wird eine derartige Lösung auf, beziehungsweise in Holz eingebracht, so bildet sich auf, beziehungsweise im Holz innerhalb kurzer Zeit ein schwerlösliches Kupfersalz des 2-Hydroxypyridin-N-oxids.

Da sowohl Kupferionen als auch 2-Hydroxypyridin-N-oxid biozid wirksam sind, werden dadurch zwei Wirksubstanzen fixiert.

Aus JP-A-78 012 403 (Zusammenfassung Nr. 20655 A/11, Derwent Publications Ltd., London) ist bekannt, die chemisch ähnliche Substanz alpha-Mercaptopyridin-N-oxid in Holz so zu fixieren, daß man Holz zuerst mit dem Na-Salz der Substanz imprägniert und dann in einem zweiten Behandlungsschritt mit einem Schwermetallsalz imprägniert. Derartige doppelte Imprägnierverfahren sind technisch unerwünscht.

Aus EP-A 0 234 461 ist bekannt Di-(N-Cyclohexyldiazeniumdioxy)-Kupfer (Cu-HDO) mit einem Polyamin und einer komplexbildenden Carbonsäure zu kombinieren. Die entsprechenden, zu imprägnierenden Hölzer müssen jedoch entweder im Kesseldruckverfahren behandelt werden oder vorher mechanisch perforiert werden, um eine ausreichende Eindringtiefe des Mittels zu gewährleisten.

Die erfindungsgemäßen Holzschutzmittel sind wäßrige Lösungen, die 2-Hydroxypyridin-N-oxid oder ein wasserlösliches Salz davon, eine oder mehrere aminische Verbindungen und ein Kupfersalz enthalten. Darüberhinaus können diese Lösungen noch ein oder mehrere wasserlösliche, biozid wirksame Verbindungen enthalten.

Beispiele für entsprechend zusätzlich einsetzbare Wirkstoffe sind Salze von quartären Ammoniumverbindungen der allgemeinen Formel 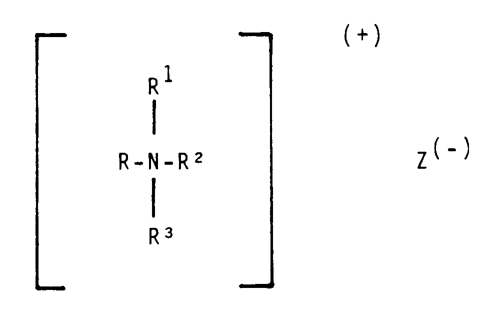
in der
- R: einen Alkylrest mit 8 bis 20 Kohlenstoffatomen, einen Alkenylrest mit 12 bis 20 Kohlenstoffatomen oder einen Benzylrest bedeutet, der gegebenenfalls durch C₁-C₂₀-Alkyl oder Halogen substituiert ist,
- R¹: C₁-C₆-Alkyl,
- R²: C₁-C₆-Alkyl,
- R³: Methyl oder C₈-C₁₈-Alkyl oder
R² und R³ zusammen mit dem Stickstoffatom einen heterocyclischen Rest bilden, der 4 bis 5 C-Atome, 1 bis 2 N-Atome und eine oder 2 Doppelbindungen enthält, wobei die Kohlenstoffatome gegebenenfalls durch C₁-C₄-Alkyl oder Halogen substituiert sind, und Z einen Säurerest bedeutet, oder polymere quartäre Ammoniumborate, die durch gleichzeitige Umsetzung von Aminen mit Ethylenoxid oder Propylenoxid und Borsäure, deren Salzen oder Estern hergestellt werden und deren Verwendung als Holzschutzmittel in einer früheren Anmeldung der Anmelderin (P 38 27 721.2) beansprucht ist.

Als aminische Verbindung kann Ammoniak oder jede wasserlösliche Verbindung, die mindestens eine primäre, sekundäre oder tertiäre Aminogruppe aufweist, einzeln oder im Gemisch mit anderen Aminen eingesetzt werden. Bevorzugt sind jedoch entweder Alkanolamine wie Ethanolamin, Diethanolamin oder Triethanolamin (für zweikomponentige Systeme) oder Amine mit zwei oder mehreren primären, sekundären oder tertiären Aminogruppen (für einkomponentige Holzschutzmittel).

Beispiele hierfür sind verzweigte oder unverzweigte aliphatische Diamine oder Polyetherdiamine der allgemeinen Formeln: 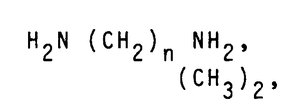
(CH₃)₂ N (CH₂)ₙ N 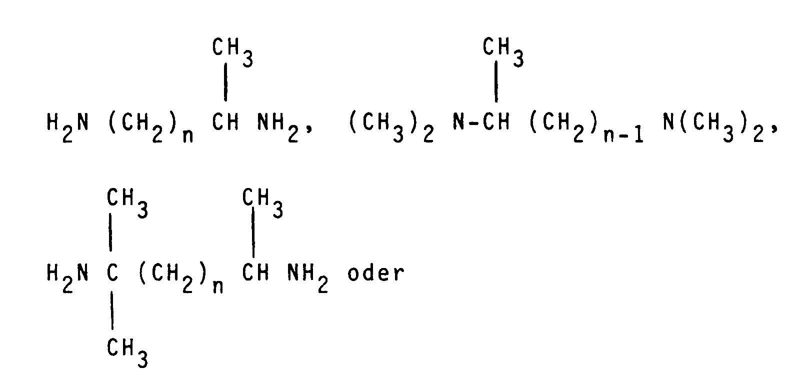
H₂N (CH₂)ₙ O (CH₂ CH₂ O)ₘ (CH₂)ₙ NH₂
alicyclische Di- oder Polyamine wie z. B.
1,3-Diaminocyclohexan, Isophorondiamin oder N-Aminoethylpiperazin
oder lineare oder verzweigte Polyamine der allgemeinen Formeln:
H₂N (CH₂)ₙ NH (CH₂)ₙ NH₂,
CH₃ (CH₂)ₙ (CH₂ CH₂ NH)ₘ CH₂ CH₂ NH₂,
H₂N ((CH₂)₂ NH)ₙ (CH₂)₂ NH₂,
(CH₃ (CH₂)ₙ)₂ N (CH₂)ₘ NH₂,
H₂N (CH₂)ₙ NH (CH₂)ₙ OH, 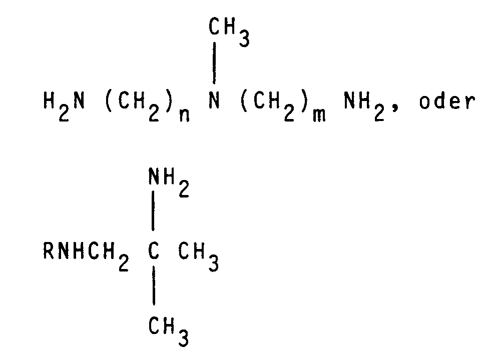
wobei n und m jeweils gleich oder verschieden sein können und ganze Zahlen von 1-6 und R einen aliphatischen, cyclischen oder aromatischen Rest bedeuten.

Als Kupfersalze können alle wasserlöslichen Salze des Kupfers verwendet werden. Dies sind im wesentlichen basische oder neutrale Kupfer(II)-salze wie Kupfer(II)-sulfat, -nitrat, -chlorid, -acetat oder -carbonat.

Die Mengen der einzusetzenden Verbindungen werden so gewählt, daß einerseits eine hohe Wirkstoffkonzentration erhalten wird, die gegebenenfalls durch Verdünnen kurz vor Gebrauch auf die Anwendungskonzentration eingestellt wird, daß aber andererseits eine gute Lagerstabilität des Mittels gegeben ist.

Hierzu bieten sich zwei Möglichkeiten an: In einem zweikomponentigen System werden konzentrierte wäßrige Lösungen von Kupfersalz und Amin, bevorzugt Alkanolamin einerseits und 2-Hydroxypyridin-N-oxid oder ein wasserlösliches Salz dieser Verbindung andererseits getrennt gelagert und kurz vor Gebrauch auf einen Gehalt an 1-5 Gew.-% Gesamtwirkstoffe verdünnt und miteinander vermischt. In diesen Mitteln liegen die molaren Mengenverhältnisse der Wirkstoffe zueinander im Verhältnis:
0,5-3 (2-Hydroxypyridin-N-oxid) : 1 (Kupfersalz) : 3-5 (Alkanolamin).

Will man lagerstabile, einkomponentige Holzschutzmittel höherer Konzentration herstellen ist die Mitverwendung eines Amins mit mindestens 2 primären, sekundären oder tertiären Aminogruppen notwendig.

Dabei wird bei Verwendung eines Amins mit 2 Aminogruppen mindestens die halbe dem Kupfersalz entsprechende äquimolare Menge an Amin eingesetzt. Bevorzugt werden Amine mit 3 Aminogruppen verwendet, von denen 1/3 der dem Kupfersalz entsprechenden äquimolaren Menge eingesetzt werden. Bei Aminen mit noch mehr Aminogruppen reduziert sich ihre einzusetzende Menge bis auf 1/4 der dem Kupfersalz äquivalenten Menge.

Derartige Lösungen enthalten bis zu 2 Mol/l Na-Salz des 2-Hydroxypyridin-N-oxids, 1 Mol Kupfer(II)-salz und mindestens 1 Mol eines entsprechenden Amins.

Auch diese Lösungen werden, falls sie konzentriert vorliegen, vor Gebrauch auf eine zweckmäßige Anwendungskonzentration im Bereich von 1-5 Gew.-% Gesamtwirkstoffe verdünnt.

Diese Mittel werden mittels üblicher Verfahren wie Spritzen, Streichen oder Tauchen auf Holz aufgebracht und zeigen dort eine hervorragende fungizide Wirkung. Sie finden daher bevorzugte Verwendung im vorbeugenden Bläueschutz.

### Beispiel

Aus
75,9 Gewichtsteilen einer 20 %igen wäßrigen Lösung von 2-Hydroxypyridin-N-oxid, Na-Salz
5 Gewichtsteilen Ethanolamin
7,8 Gewichtsteilen Diethylentriamin
11,3 Gewichtsteilen Kupfer(II)-carbonat
wird eine konzentrierte Lösung hergestellt, die durch Zugabe von Wasser auf eine Konzentration von 3,5 % (Summe aller Inhaltsstoffe) verdünnt wird.

In diese Lösung werden Probehölzer getaucht (jeweils 30 s Tauchzeit), die danach in einem Feldversuch in durchweg feuchtem warmem Klima gelagert werden.

Nach 20 Wochen ist kein Pilzbefall auf den Hölzern zu erkennen.

## Patentansprüche

1. Holzschutzmittel, **dadurch gekennzeichnet**, daß es 2-Hydroxypyridin-N-oxid oder ein wasserlösliches Salz davon, eine oder mehrere aminische Verbindungen und ein Kupfersalz enthält.

2. Holzschutzmittel nach Anspruch 1, **dadurch gekennzeichnet**, daß die aminische Verbindung ein Amin mit mindestens 2 primären, sekundären oder tertiären Aminogruppen ist.

3. Holzschutzmittel nach den Ansprüchen 1-2, **dadurch gekennzeichnet**, daß die aminische Verbindung ein Polyamin mit mindestens 3 primären, sekundären und/oder tertiären Aminogruppen ist.

4. Holzschutzmittel nach Anspruch 1, **dadurch gekennzeichnet**, daß die aminische Verbindung ein Alkanolamin ist, wobei zwei Komponenten des Mittels, Alkanolamin- und Kupfersalzlösung einerseits und 2-Hydroxypyridin-N-oxid-Lösung beziehungsweise dessen Salzlösung andererseits getrennt gelagert und erst kurz vor Gebrauch miteinander vermischt und verdünnt werden.

5. Holzschutzmittel nach den Ansprüchen 1-4, **dadurch gekennzeichnet**, daß es zusätzlich eine oder mehrere biozid wirksame, wasserlösliche Verbindungen enthält.

6. Holzschutzmittel nach den Ansprüchen 1-5, **dadurch gekennzeichnet**, daß es wasserlösliches Salz einer quartären Ammoniumverbindung als zusätzliche, biozid wirksame Verbindung enthält.

7. Holzschutzmittel nach den Ansprüchen 1-5, **dadurch gekennzeichnet**, daß es polymeres quartäres Ammoniumborat als zusätzliche, biozid wirksame Verbindung enthält.

8. Verwendung der Holzschutzmittel gemäß den Ansprüchen 1-7 zum vorbeugenden Bläueschutz.

## Claims

1. Wood protecting agent, characterized in that it contains 2-hydroxypyridine-N-oxide or a water soluble salt of that compound, one or several amine compounds and a copper salt.

2. Wood protecting agent of claim 1, characterized in that the amine compound is an amine with at least 2 primary, secondary or tertiary amino groups.

3. Wood protecting agent of claims 1 - 2, characterized in that the amine compound is a polyamine with at least 3 primary, secondary and/or tertiary amino groups.

4. Wood protecting agent of claim 1, characterized in that the amine compound is an alkanol amine, whereas two components of the agent, the alkanol amine and the copper salt solution on the one side and the solution of 2-hydroxypyridin-N-oxide respective the solution of its salt on the other side are stored separately and are mixed together before use.

5. Wood protecting agent of claims 1 - 4, characterized in that it additionally contains one or several biozide active, walter soluble compounds.

6. Wood protecting agent of claims 1 - 5, characterized in that it contains as additional biozide active substance a water soluble salt of a quarternary ammonia compound.

7. Wood protecting agent of claims 1 - 5, characterized in that it contains as additional biozide active substance a polymeric quarternary ammonia borate.

8. Use of the wood protecting agents of claims 1 - 7 as preventive protection against blue staining of wood.

## Revendications

1. Agent de protection du bois, caractérisé en ce qu'il contient du N-oxide de 2-hydroxypyridine ou un de ses sels hydrosolubles, un ou plusieurs composés aminés et un sel de cuivre.

2. Agent de protection du bois selon la revendication 1, caractérisé en ce que le composé aminé est une amine avec au moins 2 groupes amino primaires, secondaires ou tertiaires.

3. Agent de protection du bois selon les revendications 1 - 2, caractérisé en ce que le composé aminé est une polyamine avec au moins 3 groupes amino primaires, secondaires et/ou tertiaires.

4. Agent de protection du bois selon la revendication 1, caractérisé en ce que le composé aminé est une alcanolamine, moyennant quoi deux composants de l'agent, la solution d'alcanolamine et de sel de cuivre d'une part et la solution de N-oxyde de 2-hydroxypyridine, respectivement la solution de son sel d'autre part sont stockés séparément et ne sont mélangés et dilués que peu avant l'emploi.

5. Agent de protection du bois selon les revendications 1 à 4, caractérisé en ce qu'il contient en outre un ou plusieurs composés hydrosolubles doués d'une activité biocide.

6. Agent de protection du bois selon les revendications 1 à 5, caractérisé en ce qu'il contient un sel hydrosoluble d'un composé d'ammonium quaternaire en tant que composé à activité biocide additional.

7. Agent de protection du bois selon les revendications 1 à 5, caractérisé en ce qu'il contient un borate d'ammonium quarternaire polymère en tant que composé à activité biocide additionnel.

8. Utilisation des agents de protection du bois selon les revendications 1 à 7, pour la protection préventive contre la pourriture bleue.
